# EUROPEAN PATENT APPLICATION

(11) **EP 1 842 762 A1**
(43) Date of publication of application: **10.10.2007**
(21) Application number: 07007234.3
(22) Date of filing: 05.04.2007
(51) Int. Cl.: B62D 5/04

(54) **Electric power steering device**

(30) Priority: 07.04.2006 JP 2006106069; 22.01.2007 JP 2007011135
(71) Applicant: NSK Ltd., Tokyo 141-8560 (JP)
(72) Inventor: Hirakawa, Tomohisa, Maebashi-shi, Gunma 371-8527 (JP); Nagano, Suguru, Maebashi-shi, Gunma 371-8527 (JP)
(74) Representative: Grünecker, Kinkeldey, Stockmair & Schwanhäusser Anwaltssozietät

(57) **Abstract**

An electric power steering device has an electric motor for applying a steering assist force to a steering shaft connected to a steering wheel, a gear box for accommodating a speed reducing mechanism for transmitting the steering assist force of the electric motor to the steering shaft and a control unit for controlling the driving of the electric motor; the control unit is disposed on the steering wheel side of the gear box.

## Description

### BACKGROUND OF THE INVENTION

### 1. Field of the Invention

The present invention relates to an electric power steering device using an electric motor as a generating source of a steering assist torque, and more particularly to the improvement of the layout of the electric motor and a control unit (ECU) for controlling the driving of the electric motor.

### 2. Description of Related Art

In an electric power steering device mounted on a vehicle or the like, an electric motor is driven in accordance with a steering torque applied through a steering wheel and the rotation of the electric motor is transmitted to a steering mechanism through a speed reducing mechanism to assist the steering of the vehicle. The electric motor for assisting the steering is electrically connected to a control unit composed of a CPU (including an MPU) or the like and its driving is controlled by the control unit.

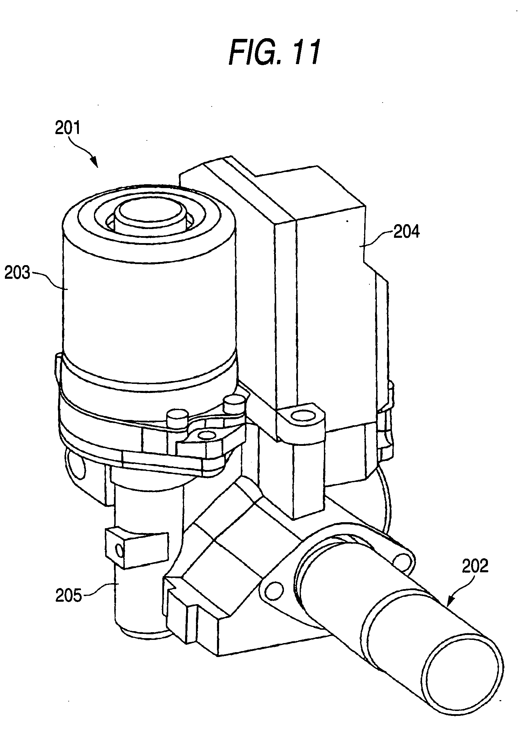

Fig. 11 is a perspective view schematically showing a column part of a usual ECU mounting type electric power steering device. In Fig. 11, the electric power steering device 201 includes a steering column 202 for supporting a steering shaft (not shown in the drawing) so as to freely rotate, an electric motor 203 for applying a steering assist force to the steering shaft and a control unit 204 for controlling the driving current of the electric motor 203, and the electric power steering device is a column assist type that the electric motor 203 and the control unit 204 are attached to the steering column 202 as the attaching member of a steering mechanism.

In the base end part of the steering column 202, a gear box in which a speed reducing mechanism for transmitting the steering assist force of the electric motor 203 to the steering shaft is accommodated is provided. The speed reducing mechanism accommodated in the gear box 205 includes a worm connected to the driving shaft of the electric motor 203 and a worm wheel engaging with the worm and connected to the steering shaft to reduce the speed of the rotation of the electric motor 203 and transmit the rotation to the steering shaft.

Further, the control unit 204 is connected to a torque sensor or a vehicle speed sensor not shown in the drawing to control the driving current of the electric motor 203 in accordance with signals outputted from these various kinds of sensors.

In the electric power steering device 201 in which the electric motor 203 and the control unit 204 are mounted integrally on the steering column 202 as shown in Fig. 11, when the electric power steering device is mounted on a vehicle complicated day by day, the layout of the electric motor 203 and the control unit 204 is important.

Thus, in the ECU mounting type electric power steering device having the above-described structure, to add a function for improving layout characteristics or a heat radiation efficiency, the layout of the electric motor 203 and the control unit 204 has been hitherto improved.

However, when the electric motor 203 attached to such an electric power steering device receives a mechanical or electrical excitation, the electric motor 203 generates vibration and noise. However, the characteristics of the vibration and noise cannot be understood until the electric motor 203 is attached to the electric power steering device and are hardly previously anticipated. To improve the characteristics of the vibration and noise, the improvement of the structure of the electric motor 203 requires a great development period and a high cost. Accordingly, since the usual electric power steering device has a structure in which the noise generated by the electric motor 203 is directly transmitted to a driver's seat or an assistant seat in a compartment, the noise needs to be reduced.

Thus, as a technique for solving the above-described problems, for instance, Japanese Patent Unexamined Publication JP-A-2001-128410 discloses an electric power steering device in which a reinforcing material is provided in an electric motor (a rotating electric motor) to reduce the vibration of the electric motor itself so that the vibration of the device formed by the electric motor is reduced.

However, in the case of the electric power steering device using the electric motor, a problem arises that only the vibration of the electric motor itself is reduced and the noise of the electric motor is easily propagated to a compartment depending on the structure of the arrangement of the entire part of the electric power steering device.

Further, when the electric motor disclosed in the JP-A-2001-128410 is used, the reinforcing material is provided in the electric motor so that the production cost of the electric motor is increased and the inner structure of the electric motor is complicated. Thus, since workability for an assembly is deteriorated, it is difficult to lower the cost of the electric power steering device.

Further, when an ordinary electric motor having no noise reducing structure is used, a noise insulating wall or a noise absorbing wall may be disposed in a vehicle side to reduce noise. In this case, a problem arises that the noise insulating wall or the noise absorbing wall is provided, so that the production cost is also increased and the weight of a vehicle is increased.

### SUMMARY OF THE INVENTION

Thus, the present invention is devised by considering the above-described circumstances and it is an object of the present invention to provide an electric power steering device that can easily suppress the noise of an electric motor transmitted to a compartment side without increasing a production cost.

In order to achieve the above-mentioned obj ect, according to a first aspect of the invention, there is provided an electric power steering device comprising:
a steering shaft connected to a steering wheel;
an electric motor for applying a steering assist force to the steering shaft;
a gear box for accommodating a speed reducing mechanism that transmits the steering assist force of the electric motor to the steering shaft; and
a control unit that controls to drive the electric motor,
wherein the control unit is disposed close to the steering wheel relative to the gear box.
According to a second aspect of the invention, as set forth in the first aspect of the invention, it is preferable that the control unit is disposed close to the gear box without contacting each other.
According to a third aspect of the invention, as set forth in the first aspect of the invention, it is preferable that the control unit is disposed close to the gear box in a contact state therewith through an elastic member.
According to a fourth aspect of the invention, as set forth in the first aspect of the invention, it is preferable that the control unit comprises a sound insulatingplate extended to a lower part of a bottom part of the gear box from a part of a surface of a case thereof opposed to the gear box.
According to a fifth aspect of the invention, as set forth in the first aspect of the invention, it is preferable that the control unit has the sound insulating plate extended toward the electric motor along the surface of the case opposed to the gear box.
According to a sixth aspect of the invention, as set forth in the fourth aspect of the invention, it is preferable that the sound insulating plate has a plate shaped sound absorbing material on a surface opposed to the gear box.
According to a seventh aspect of the invention, as set forth in the first aspect of the invention, it is preferable that the control unit comprises a plate shaped sound absorbing material on a surface of the control unit opposed to the gear box.
According to an eighth aspect of the invention, as set forth in the first aspect of the invention, it is preferable that the electric motor and the gear box are provided in a base end part of a steering column for rotatably supporting the steering shaft and
the control unit is fixed to the steering column.
According to a ninth aspect of the invention, there is provided an electric power steering device comprising:
a steering shaft connected to a steering wheel;
an electric motor that applies a steering assist force to the steering shaft;
a control unit that controls to drive the electric motor,
wherein the control unit is disposed between the steering wheel and the electric motor.
According to a tenth aspect of the invention, as set forth in the ninth aspect of the invention, it is preferable that the control unit is disposed close to the electric motor.
According to an eleventh aspect of the invention, as set forth in the ninth aspect of the invention, it is preferable that when the electric motor is viewed from the steering wheel side, the electric motor is completely hidden by the control unit.
According to a twelfth aspect of the invention, as set forth in the ninth aspect of the invention, it is preferable that the control unit comprises a housing, and
on a surface opposed to the electric motor, the housing comprises a sound absorbing material or a composite material having a noise absorbing effect.

In the electric power steering device according to the present invention, the control unit for controlling the driving of the electric motor is arranged in the steering wheel side (a driver side) from the gear box in which the speed reducing mechanism for transmitting the steering assist force of the electric motor to the steering shaft. Thus, since the propagation of the operating noise generated by the speed reducing mechanism in the gear box can be reduced, the compatibility of the degree of freedom of a layout with the interrupting effect of the operating noise can be realized.

Further, the control unit is disposed close to the gear box under a non-contact state therewith, so that the control unit can be prevented from being excited due to the vibration of the gear box and the operating noise generated in the gear box can be effectively interrupted.

Further, since the control unit is disposed close to the gear box under a contact state therewith through a sound absorbing material made of an elastic member, the vibration generated in the gear box can be reduced by a principle of a dynamic damper in addition to the above-described effects.

Further, a sound insulating plate is provided that is extended to the lower part of the bottom part of the gear box from a part of the surface of a case of the control unit opposed to the gear box, so that noise propagated to the lower part of the bottom part from the gearbox canbe interrupted. Further, the sound insulating plate is provided that is extended toward the electric motor along the surface of the case of the control unit opposed to the gear box, so that the noise transmitted to the driver side from the electric motor can be interrupted. Thus, a noise insulating effect can be more effectively realized.

Further, the surface of the control unit and the sound insulating plate opposed to the gear box is provided with a plate shaped sound absorbing material, so that the operating noise emitted from the gear box or the electric motor can be absorbed and the noise in the electric power steering device can be more reduced.

Further, in the electric power steering device according to the present invention, the control unit for controlling the driving of the electric motor is disposed between the steering wheel and the electric motor. That is, the control unit is disposed so as to interrupt a part between the steering wheel and the electric motor. Thus, since the noise of the electric motor is interrupted by the control unit, the noise of the electric motor transmitted to a compartment side can be easily suppressed without providing the noise insulating wall or the noise absorbing wall. As a result, the electric power steering device in which the noise propagated to the compartment from the electric motor is reduced can be inexpensively provided.

Further, since the control unit case forming the control unit includes the composite material having the sound absorbing material or the noise absorbing effect on the surface opposed to the electric motor, noise emitted from the electric motor can be absorbed and the noise of the electric power steering device can be more reduced.

### BRIEF DESCRIPTION OF THE DRAWINGS

Fig. 1 is a mechanism diagram showing the schematic structure of the electric power steering device according to an embodiment of the present invention;
Fig. 2 is a perspective view schematically showing the column part of the electric power steering device according to a first embodiment of the present invention;
Fig. 3 is a side view schematically showing the column part of the electric power steering device according to the first embodiment of the present invention;
Fig. 4 is a perspective view schematically showing the column part of the electric power steering device according to a second embodiment of the present invention;
Fig. 5 is a side view schematically showing the column part of the electric power steering device according to the second embodiment of the present invention;
Fig. 6 is a side view schematically showing the column part of the electric power steering device according to a third embodiment of the present invention;
Fig. 7 is a perspective view schematically showing the column part of the electric power steering device according to a fourth embodiment of the present invention;
Fig. 8A is a perspective view schematically showing the column part of the electric power steering device according to a fifth embodiment of the present invention;
Fig. 8B is an explanatory view schematically showing a state that an ECU cover of a control unit according to the fifth embodiment is attached;
Fig. 9 is a perspective view showing a column part of the electric power steering device according to a sixth embodiment of the present invention:
Fig. 10 is a schematic side view looking an electric motor and a control unit from the direction shown by an arrow mark X in Fig. 9;
Fig. 11 is a perspective view schematically showing the column part of a usual electric power steering device.

### DETAILED DESCRIPTION OF EXEMPLARY EMBODIMENTS OF THE INVENTION EMBODIMENTS

Now, referring to the drawings, an embodiment of the present invention will be described below.

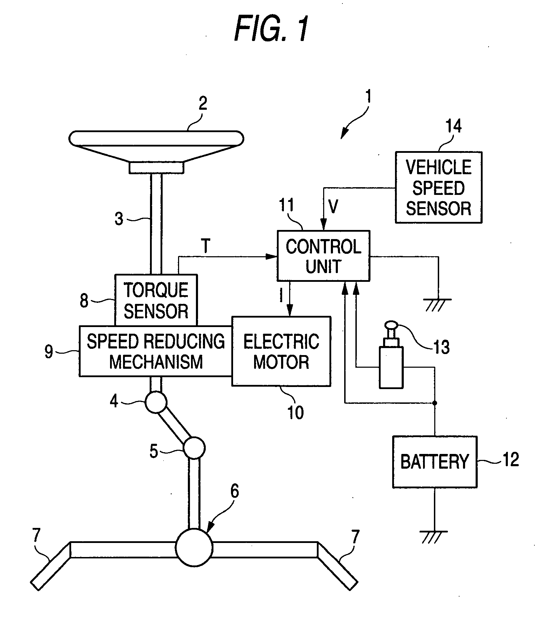

Fig. 1 is a mechanism diagram showing a schematic structure of the electric power steering device according to an embodiment of the present invention. In Fig. 1, a steering mechanism of the electric power steering device 1 includes a steering shaft 3 rotating in accordance with the steering operation of a steering wheel 2 attached to an end part, a rack and pinion mechanism 6 connected to the other end side of the steering shaft 3 through universal joints 4 and 5 to convert the rotating movement of the steering shaft 3 to the linear movement of a rack shaft, and tie rods 7 for transmitting the movement of the rack shaft of the rack and pinion mechanism 6 to driving wheels.

Further, in a column part of the electric power steering device 1, provided are a torque sensor 8 for detecting a steering torque inputted to the steering shaft 3 through the steering wheel 2 and an electric motor 10 for assisting a steering connected to the steering shaft 3 through a speed reducing mechanism 9.

The driving of the electric motor 10 is controlled by a control unit (ECU) 11 on which a control circuit is mounted. To the control unit 11, an electric power is supplied from a battery 12 and an ignition key signal is inputted from an ignition key 13. Then, the control unit 11 calculates a steering assist command value I in accordance with a steering torque value T detected in the torque sensor 8 and a vehicle speed V detected in a vehicle speed sensor 14 to control a driving current supplied to the electric motor 10 on the basis of the calculated steering assist command value I.

### [First Embodiment]

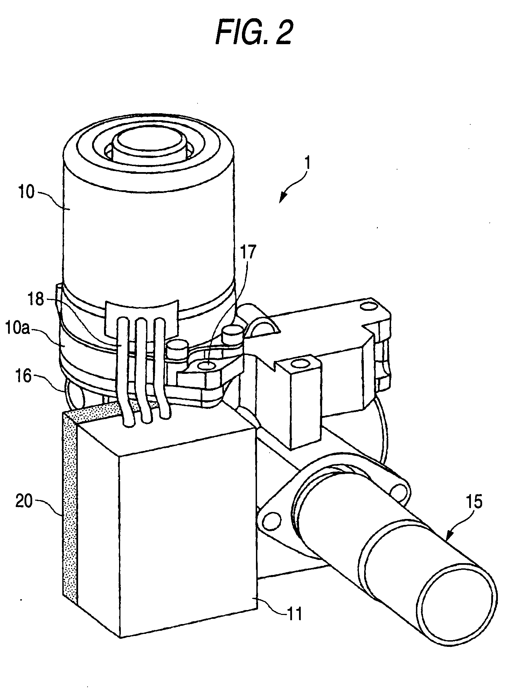

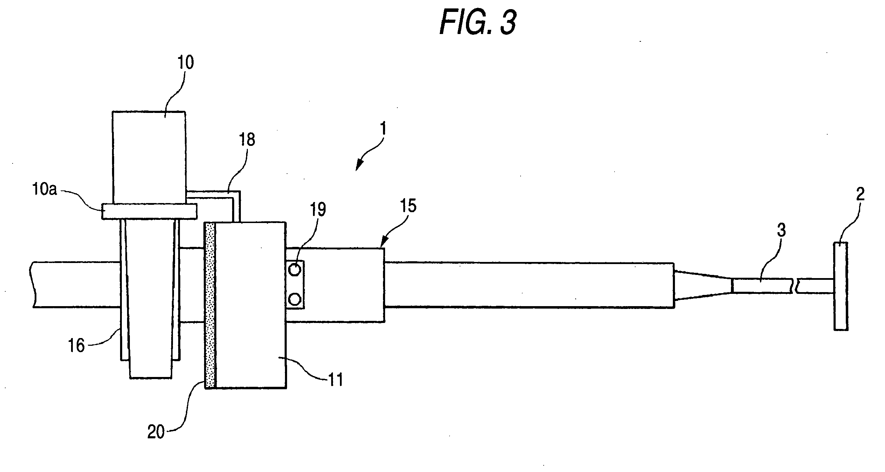

Fig. 2 is a perspective view schematically showing the column part of the electric power steering device according to a first embodiment of the present invention. Fig. 3 is a side view schematically showing the column part of the electric power steering device according to the first embodiment.

The above-described steering shaft 3 is supported in a substantially cylindrical steering column 15 shown in Fig. 2 so as to freely rotate. In a gear box 16 provided in the base end part of the steering column 15, the speed reducing mechanism 9 is accommodated that includes a worm connected to the driving shaft of the electric motor 10 and a worm wheel engaging with the worm and connected to the steering shaft 3. The speed of the rotation of the electric motor 10 is reduced through the speed reducing mechanism 9 and the rotation is transmitted to the steering shaft 3.

The electric motor 10 has a flange part 10a formed in a boundary position of a main body part and the driving shaft. In the flange part 10a, attaching holes 17 are formed. To the attaching holes 17, fixingbolts as detachable mechanical fixing units are inserted and fastened to tap holes formed on the upper part of the gear box 16. Thus, the electric motor 10 is fixed to the gear box 16.

The control unit 11 for controlling the driving current of the electric motor 10 is electrically connected to the electric motor 10 through power harnesses 18. As shown in Fig. 3, the control unit 11 is disposed close to the gear box 16 and in the steering wheel 2 side from the gear box 16 under a non-contact state therewith. The control unit 11 is fixed to the steering column 15 through fixing bolts 19. In other words, the control unit 11 is disposed between the gear box 16 and the steering wheel 12 so as to interrupt a part between the gear box 16 and the steering wheel 12. Ordinarily, since the case of the control unit 11 is made of a metal material whose rigidity is lower than that of the gear box 16, when the control unit is disposed in contact with the gear box 16 made of metal, there is a fear that the case of the control unit 11 vibrates due to the excitation force of the gear box 16 to more deteriorate a noise. Thus, in this embodiment, the control unit 11 is disposed at a position in the steering wheel 2 side a little spaced from the gear box. This arrangement structure allows a noise emitted from the gear box 16 to the steering wheel 2 side (a driver side) to be interrupted by the control unit 11.

Further, in the usual ECU mounting type electric power steering device 201 as shown in Fig. 11, the control unit 204 has a relatively large part protruding in the radial direction from the column cylindrical part. However, in the electric power steering device 1 according to this embodiment, the control unit 11 can be attached so as not to protrude in the radial direction from the column cylindrical part as little as possible. Thus, the control unit can be arranged so that a noise emitted from the engaging part of the worm and the worm wheel as one of the problems of the noise generated in the gear box 16 can be interrupted by the control unit 11.

Further, on the surface of the case of the control unit 11 opposed to the gear box 16, a sound absorbing material 20 is provided on the entire part thereof. Thus, a noise insulating performance is more improved. As a material of the sound absorbing material 20, glass wool or polyurethane material such as urethane foam, which is excellent in its sound absorbing effect, is preferable. A compound material having the above-described plurality of materials with the noise absorbing effect combined may be employed.

### [Second Embodiment]

Now, a second embodiment of the present invention will be described below.

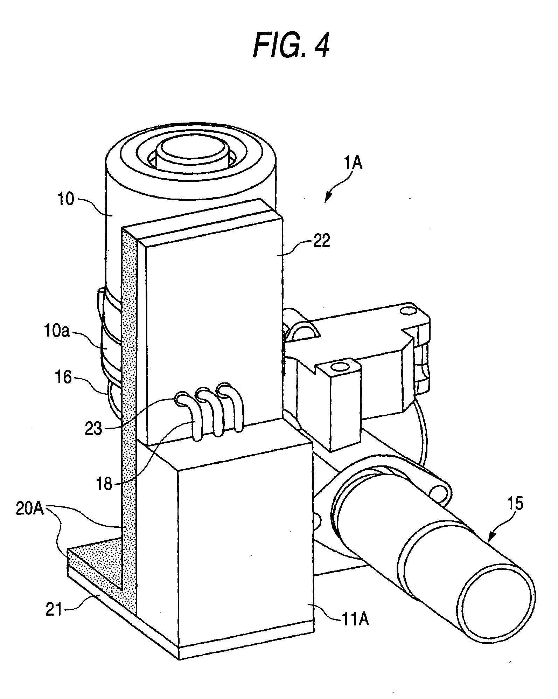

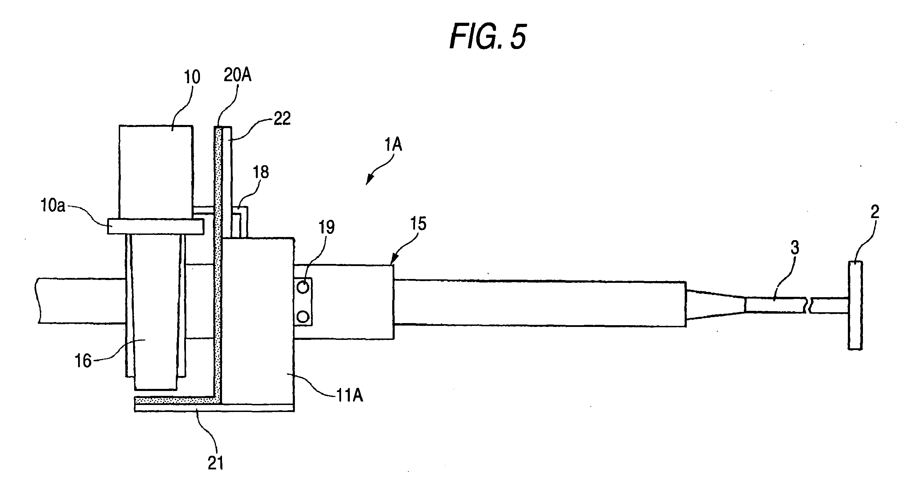

Fig. 4 is a perspective view schematically showing the column part of the electric power steering device according to a second embodiment of the present invention. Fig. 5 is a side view schematically showing the column part of the electric power steering device according to the second embodiment. In this embodiment, the same members as those of the first embodiment are designated by the same reference numerals and an explanation thereof is omitted.

In the electric power steering device 1A according to this embodiment, a control unit 11A is disposed in a steering wheel 2 side from a gear box 16 and close to the gear box 16 under a non-contact state therewith like the electric power steering device 1 according to the first embodiment, and fixed to a steering column 15 through fixing bolts 19.

In the bottom part of the control unit 11A, a gear box lower sound insulating plate 21 is provided that extends from the surface of a case opposed to the gear box 16 to the lower part of the bottom part of the gear box 16. On the upper part of the control unit 11A, an electric motor side sound insulating plate 22 is provided that extends toward an electric motor 10 along the surface of the case opposed to the gear box 16. These sound insulating plates 21 and 22 are made of an aluminummaterial to interrupt an operating noise of a speed reducing mechanism 9 emitted downward from the bottom part of the gear box 16 and an operating noise of the electric motor 10 emitted toward a steering shaft 3 from the side surface of the electric motor 10. On the sound insulating plates 21 and 22 and the surface of the control unit 11A opposed to the gear box 16, a sound absorbing material 20A having a noise absorbing effect is provided on all the surfaces thereof.

Power harnesses 18 are inserted into harness holes 23 bored so as to pass through the electric motor side sound insulating plate 22 and the sound absorbing material 20A to electrically connect the control unit 11A to the electric motor 10. In Fig. 4, the power harnesses,18 of three phases are respectively inserted into separate harness holes 23. However, the present invention is not limited thereto, and for instance, the power harnesses 18 of the three-phases may be inserted together into one harness hole 23.

As described above, according to the electric power steering device 1A according to this embodiment, the control unit 11A is disposed in the steering wheel 2 side from the gear box 16 and close to the gear box 16 under a non-contact state therewith. In the bottom part of the control unit 11A, the gear box lower sound insulating plate 21 is provided. On the upper part of the control unit 11A, the electric motor side sound insulating plate 22 is provided. Thus, not only the same operational effect as that of the first embodiment can be obtained, but also the operating noise of the speed reducing mechanism 9 emitted downward from the bottom part of the gear box 16 can be interrupted by the gear box lower sound insulating plate 21 and the operating noise of the electric motor 10 emitted toward the steering shaft 3 side from the side surface of the electric motor 10 can be interrupted by the electric motor side sound insulating plate 22. Thus, the noise of the electric power steering device can be more effectively reduced.

In this embodiment, as the electric motor side sound insulating plate 22, a flat plate shaped member is attached, however, the present invention is not limited thereto, and, for instance, a circular arc shaped plate formed to the configuration of the electric motor 10 may be used. Thus, a more effective noise insulating effect can be realized.

### [Third Embodiment]

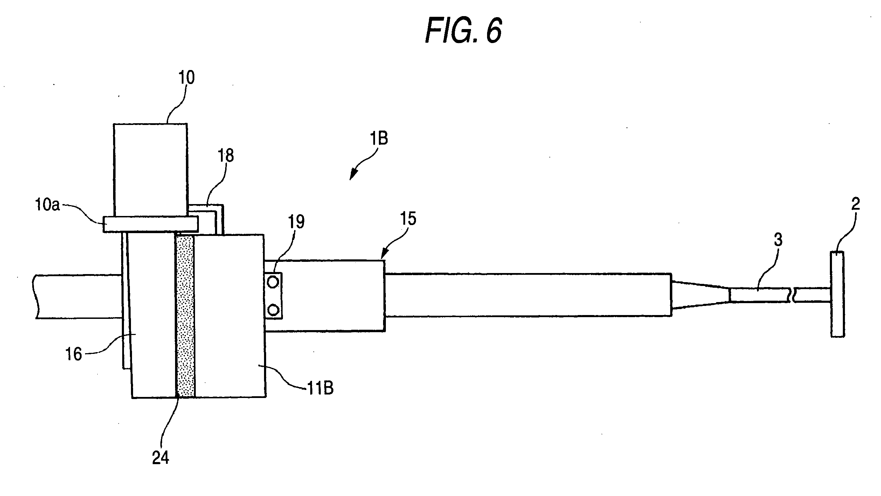

Fig. 6 is a side view schematically showing the column part of the electric power steering device according to a third embodiment of the present invention. In this embodiment, the same members as those of the above-described first and second embodiments are designated by the same reference numerals and an explanation thereof is omitted.

In Fig. 6, a control unit 11B of an electric power steering device 1B is disposed in a steering wheel 2 side from a gear box 16 and close to the gear box 16 under a contact state therewith through an elastic member 24. Thus, not only the same noise insulating effect as that of the first embodiment can be obtained, but also the control unit 11B can be used as a mass of a dynamic damper for reducing a vibration generated in the gear box 16.

### [Fourth Embodiment]

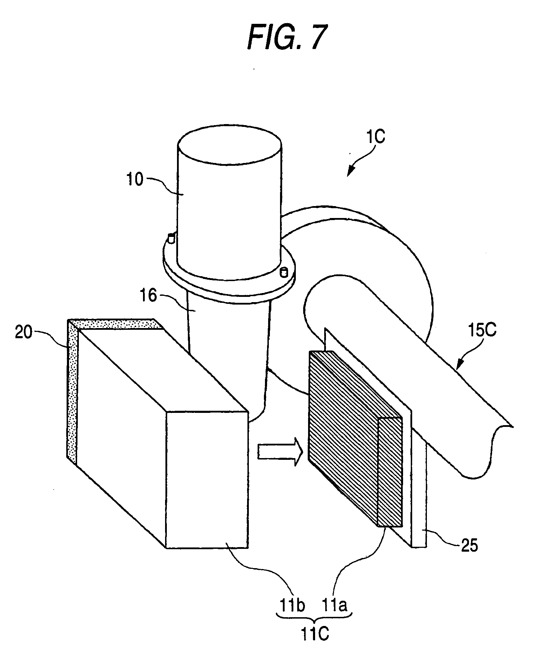

Fig. 7 is a perspective view schematically showing the column part of the electric power steering device according to a fourth embodiment of the present invention. In this embodiment, the same members as those of the above-described first to third embodiments are designated by the same reference numerals and an explanation thereof is omitted. Further, an illustration of a power harness 18 for connecting an electric motor 10 to a control unit 11C is omitted to simplify an explanation.

In Fig. 7, an ECU base plate 11a of the control unit 11C is directly fixed to a base plate attaching surface 25 formed on a part of a steering column 15C in a steering wheel 2 side from a gear box 16 and a box shaped ECU cover 11b is attached so as to cover the ECU base plate 11a therewith. Further, on a surface of the ECU cover 11b opposed to the gear box, a sound absorbing material 20 is provided on the entire part thereof like the first embodiment.

In the electric power steering device 1C according to this embodiment, since the ECU base plate 11a of the control unit 11C is directly attached to the steering column 15C, however, the ECU cover 11b for covering the ECU base plate 11a is attached so as to'interrupt a part between the gear box 16 and the steering wheel 2, the same effect as that of the first embodiment can be obtained and the heat radiating effect of the ECU base plate 11a can be improved.

### [Fifth Embodiment]

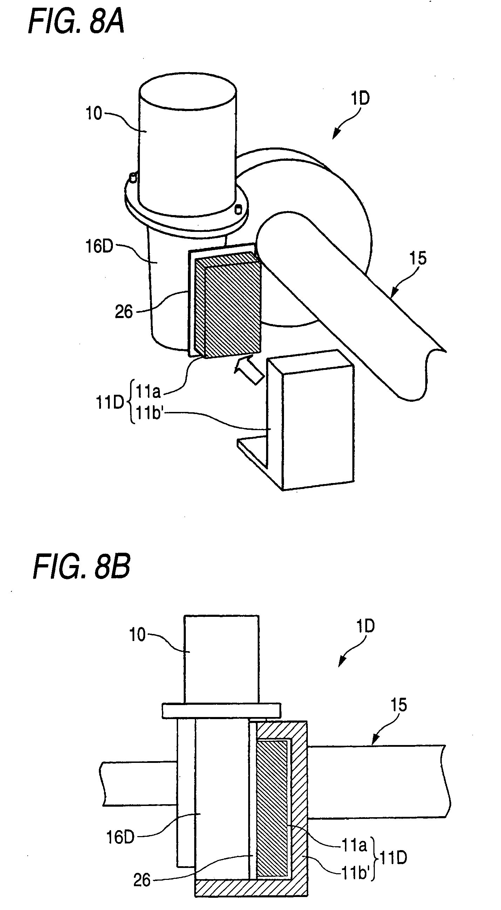

Fig. 8A is a perspective view schematically showing the column part of the electric power steering device according to a fifth embodiment of the present invention. Fig. 8B is an explanatory view schematically showing a state that an ECU cover of a control unit according to a fifth embodiment is attached.
In this embodiment, the same members as those of the above-described first to fourth embodiments are designated by the same reference numerals and an explanation thereof is omitted. Further, an illustration of a power harness 18 for connecting an electric motor 10 to a control unit 11D is omitted to simplify an explanation.

In Figs.8A and 8B, an ECU base plate 11a of the control unit 11D is directly fixed to a base plate attaching surface 26 formed in a steering wheel 2 side of a gear box 16D and a box shaped ECU cover 11b' is attached so as to cover the ECU base plate 11a therewith.

The ECU cover 11b' has a lower side surface extended toward an opening so that the ECU cover 11' can cover the lower part of the gear box 16D when the cover is attached. Thus, not only an operating noise of a speed reducing mechanism 9 emitted toward the steering wheel 2 from the gear box 16D, but also an operating noise emitted downward from the bottom part of the gear box 16D can be interrupted.

Further, in the electric power steering device 1D according to this embodiment, since the control unit 11D is directly attached to the gear box 16D, the ECU cover 11b' is formed with a thick material with high rigidity not so as to vibrate by the excitation force of the speed reducing mechanism 9.

According to such a structure, in the electric power steering device 1D, not only the same noise insulating effect as that of the first embodiment can be obtained, but also the heat radiating effect of the ECU base plate 11a and a damping effect of the excitation force by the speed reducing mechanism 9 can be improved.

### [Sixth Embodiment]

Next, a sixth embodiment of the present invention will be described below by referring to the drawings.

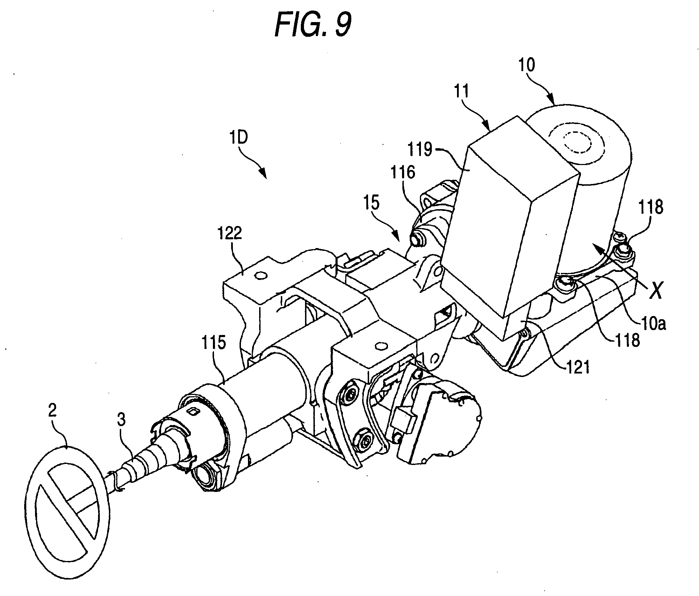

Fig. 9 is a perspective view showing the column part of the electric power steering device 1D according to this embodiment. In Fig. 9, the steering shaft 3 is supported in a steering column 15 so as to freely rotate. The steering column 15 includes a substantially cylindrical inner column 115 and a housing 116 having an outer column to which the inner column 115 can be internally fitted.

The housing 116 is a casting made of an aluminum alloy and has therein the speed reducing mechanism 9 including a reduction gear for reducing the speed of the rotation of the electric motor 10 to transmit the rotation to the steering shaft 3.

The electric motor 10 has a flange part 10a in the periphery of a side that is attached to the housing 116 of the steering column 15. This flange part 10a is formed in a boundary position between the main body part of the electric motor 10 and the output shaft of the electric motor 10 and has a plurality of attaching holes formed at equal intervals along the circumference direction. Then, fixing bolts 118 as detachable mechanical fixing units are respectively inserted into the attaching holes and fastened to tap holes formed on the upper part of the housing 116. Thus, the electric motor 10 is fixed to the housing 116.

In the electric power steering device according to this embodiment, the control unit 11 for controlling the driving current of the electric motor 10 is disposed so as to interrupt a part between the steering wheel 2 and the electric motor 10. The control unit 11 is fixed to a part of the flange part 10a of the electric motor 10 through a bolt and an output terminal (not shown in the drawing) is fastened and fixed to a bus bar (not shown in the drawing) of the electric motor 10 so that the control unit is electrically connected to the electric motor 10. That is, in the electric power steering device according to this embodiment, the control unit 11 is arranged closely to the electric motor 10 so as to interrupt the part between the electric motor 10 and the steering wheel 2.

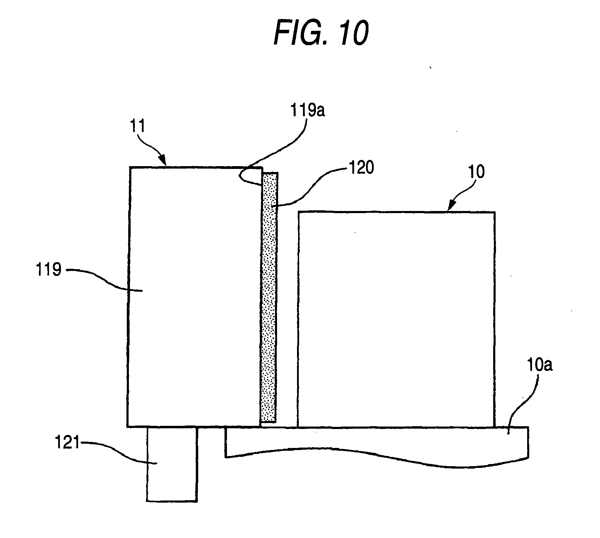

Fig. 10 is a schematic side view by looking the electric motor 10 and the control unit 11 from a direction shown by an arrow mark X in Fig. 9. As shown in Fig. 10, a control unit case 119 forming the control unit 11 includes a sound absorbing material 120 on a surface 119a opposed to the electric motor 10. As a material of the sound absorbing material, glass wool or polyurethane material such as urethane foam, which is excellent in its sound absorbing effect, is preferable.

In this embodiment, the sound absorbing material 120 is provided only on the surface 119a opposed to the electric motor 10, however, the present invention is not limited thereto, and, for instance, the sound absorbing material may be provided on all the surface of the control unit case 119 of the control unit 11. Further, as the sound absorbing material 120, a composite material having the above-described plurality of materials with the noise absorbing effect combined may be employed.

Further, the control unit 11 includes a connector part 121 connected to the torque sensor 8, the vehicle speed sensor 14 and the battery 12 and the signal such as the steering torque value T or the vehicle speed V is inputted and the electric power is supplied from the battery 12 through the connector part 121. In the control unit 11 having the above-described structure, the steering assist command value I is calculated on the basis of the signals such as the steering torque value T or the vehicle speed V to supply the driving current corresponding to the steering assist command value I to the electric motor 10 through the output terminal and the bus bar.

Reference numeral 122 in Fig. 9 designates a bracket for attaching the steering column 115 to a side member of a vehicle. Since these members have the same structures as those well known, an explanation thereof is omitted.

As described above, in this embodiment, the control unit 11 for controlling the driving of the electric motor 10 is disposed closely to the electric motor 10 so as to interrupt the part between the electric motor 10 and the steering wheel 2. Thus, when the electric motor is viewed from the steering wheel 2, the electric motor 10 is hidden by the control unit 11 so that the noise of the electric motor 10 propagated to the steering wheel 2 side is reduced. As a result, the noise propagated to a driver and a person riding together in a compartment of the vehicle is reduced so that they can enjoy a comfortable driving.

Further, when the electric power steering device according to this embodiment is used, the noise of the electric motor 10 transmitted to the compartment side can be easily suppressed without providing a member such as a noise insulating wall or a noise absorbing wall. Accordingly, the noise of the electric motor 10 can be restrained from being transmitted to the compartment side without increasing a production cost.

Further, in the electric power steering device according to this embodiment, the control unit case 119 of the control unit 11 is provided with the sound absorbing material 120 having the noise absorbing effect at least on the surface 119a opposed to the electric motor 10. Thus, a noise emitted from the electric motor 10 is absorbed, so that the noise of the electric power steering device can be more effectively reduced.

In this embodiment, the control unit 11 is disposed so that when the electric motor is viewed from the steering wheel 2, the electric motor 10 is completely hidden by the control unit 11. However, the present invention is not limited thereto, and, for instance, even when a part of the electric motor is seen, the same noise interrupting effect can be obtained and the noise of the electric motor transmitted to the compartment side can be reduced.

The embodiment of the present invention is specifically described above, however, the present invention is not limited thereto and may be suitably changed within a range without departing the gist thereof.

## Claims

1. An electric power steering device comprising:
a steering shaft connected to a steering wheel;
an electric motor for applying a steering assist force to the steering shaft;
a gear box for accommodating a speed reducing mechanism that transmits the steering assist force of the electric motor to the steering shaft; and
a control unit that controls to drive the electric motor,
wherein the control unit is disposed close to the steering wheel relative to the gear box.

2. The electric power steering device according to claim 1, wherein the control unit is disposed close to the gear box without contacting each other.

3. The electric power steering device according to claim 1, wherein the control unit is disposed close to the gear box in a contact state therewith through an elastic member.

4. The electric power steering device according to claim 1, wherein the control unit comprises a sound insulating plate extended to a lower part of a bottom part of the gear box from a part of a surface of a control unit case opposed to the gear box.

5. The electric power steering device according to claims 1, wherein the control unit has the sound insulating plate extended toward the electric motor along the surface of the control unit case opposed to the gear box.

6. The electric power steering device according to claim 4,wherein the sound insulating plate has a plate shaped sound absorbing material on a surface of the sound insulating plate opposed to the gear box.

7. The electric power steering device according to claim 1, wherein the control unit comprises a plate shaped sound absorbing material on a surface of the control unit opposed to the gear box.

8. The electric power steering device according to claim 1, wherein the electric motor and the gear box are disposed to a base end part of a steering column for rotatably supporting the steering shaft and
the control unit is fixed to the steering column.

9. An electric power steering device comprising:
a steering shaft connected to a steering wheel;
an electric motor that applies a steering assist force to the steering shaft;
a control unit that controls to drive the electric motor,
wherein the control unit is disposed between the steering wheel and the electric motor.

10. The electric power steering device according to claim 9, wherein the control unit is disposed close to the electric motor.

11. The electric power steering device according to claim 9, wherein when the electric motor is viewed from the steering wheel side, the electric motor is completely hidden by the control unit.

12. The electric power steering device according to claim 9, wherein the control unit comprises a housing, and
on a surface opposed to the electric motor, the housing comprises a sound absorbing material or a composite material having a noise absorbing effect.
